# EUROPÄISCHE PATENTSCHRIFT

(11) **EP 2 321 547 B1**
(45) Veröffentlichungstag und Bekanntmachung des Hinweises auf die Patenterteilung: **28.03.2012**
(21) Anmeldenummer: 09778090.2
(22) Anmeldetag: 25.08.2009
(51) Int. Cl.: F16D 65/12

(54) **BREMSSCHEIBE MIT BREMSSCHEIBENTOPF**
BRAKE DISK HAVING A BRAKE DISK POT
DISQUE DE FREIN AVEC POT DE DISQUE DE FREIN

(30) Priorität: 10.09.2008 DE 102008046546
(43) Veröffentlichungstag der Anmeldung: 18.05.2011
(73) Patentinhaber: Daimler AG, 70327 Stuttgart (DE)
(72) Erfinder: BOTSCH, Siegfried, 71120 Grafenau (DE); JÄCKEL, Klaus, 89278 Nersingen (DE); LESCH, Martin, 71336 Waiblingen (DE); QUINGER, Christian, 73614 Schorndorf (DE); STEINHAUER, Thomas, 73732 Esslingen (DE); WILKE, David, 71573 Allmersbach im Tal (DE)
(74) Vertreter: Moore, Derek
(86) Internationale Anmeldenummer: PCT/EP2009/006145
(87) Internationale Veröffentlichungsnummer: WO 2010/028746

(56) Entgegenhaltungen:
- EP-A- 0 198 217
- WO-A-97/06965
- WO-A-03/019032
- WO-A-2005/019678
- WO-A-2007/041518
- DE-A1- 10 125 111
- DE-A1- 19 918 667

## Beschreibung

Die Erfindung betrifft eine Bremsscheibe, insbesondere für einen Kraftwagen, der im Oberbegriff des Patentanspruchs 1 angegebenen Art.

Eine Bremsscheibe ist beispielsweise aus der DE 101 25 111 A1 bekannt. Sie umfasst einen Reibring und ein Halteteil, wobei Reibring und Halteteil über ein Verzahnungsprofil formschlüssig in radialer Richtung der Bremsscheibe miteinander verbunden sind. Eine axiale Sicherung von Reibring und Halteteil erfolgt durch einen umlaufenden Sicherungsring, welcher in einer Nut des Reibrings und/oder Halteteils geführt ist. Das Verzahnungsprofil ist dabei in Form einer Evolventenverzahnung ausgestaltet.

Derartige formschlüssige Verbindungen von Reibringen und Halteteilen beziehungsweise Bremsscheibentöpfen über eine Verzahnung verleihen den beiden Teilen eine gute Sicherung in radialer Richtung gegeneinander und dienen gleichzeitig der Kraftübertragung zwischen Bremsscheibentopf und Reibring. Da eine derartige Verbindung den Innenumfang des Reibringes weitestgehend für das Anbringen der Verzahnung beansprucht, ergibt sich nun ein Problem bei der Verwendung solcher formschlüssiger Verbindungen für innenbelüftete Bremsscheiben. Die Bremsscheiben weisen ein zwischen den Seitenflächen der Reibringe verlaufendes System an Lüftungskanälen auf, welche im Betrieb der Bremsscheibe von Luft durchströmt werden, um so Wärme aus den Reibringen abzuführen. Ungenügende Wärmeabfuhr führt zu so genannter Schirmung der Bremsscheibe, worunter ein Aufwölben der Bremsscheibe in axialer Richtung durch ungleichmäßige Erwärmung verstanden wird. Ist nun der Innenumfang des Reibringes durch eine Verzahnung belegt, kann sich die Innenbelüftungsanordnung nicht durchgängig durch den Reibring hindurch erstrecken, da am Innenumfang keine Durchgangslöcher, welche die Luftkanäle mit der Umgebungsluft verbinden, angebracht werden können. Bei hohen thermischen Belastungen kann es bei solchen Bremsscheiben daher zu Schirmung und gegebenenfalls zur Rissbildung kommen.

Die US 6 446 765 offenbart eine Bremsscheibe gemäß dem Oberbegriff des Anspruchs 1.

Es ist also Aufgabe der vorliegenden Erfindung, eine Bremsscheibe der eingangs genannten Art dergestalt weiter zu entwickeln, dass sowohl ein stabiler Formschluss zwischen Reibring und Bremsscheibentopf als auch eine gute Wärmeabfuhr aus dem Reibring im Betrieb der Bremsscheibe gewährleistet ist.

Diese Aufgabe wird durch eine Bremsscheibe mit den Merkmalen des Patentanspruchs 1 gelöst. Ein Verfahren zur Montage der Bremsscheibe gemäß Anspruch 1 ist mit den Merkmalen des Patentanspruchs 8 offenbart.

Die Bremsscheibe weist dabei einen Bremsscheibentopf und einen radial über eine Formschlussverbindung mit diesem verbundenen Reibring auf. Der Reibring umfasst zwei über Abstandsmittel verbundene Reibringhälften, zwischen denen Luftkanäle einer Innenbelüftungsanordnung angeordnet sind. Erfindungsgemäß ist vorgesehen, dass die Formschlussverbindung eine nur eine der Reibringhälften innenumfangseitig verlaufende Verzahnung umfasst, welche in Eingriff mit einer komplementären, den Bremsscheibentopf außenumfangseitig umlaufenden Verzahnung bringbar ist. Da die Verzahnung nur eine der Reibringhälften umfasst, steht somit zusätzliche Fläche am inneren Umfang des Reibringes zur Verfügung, um axial benachbart zu der Verzahnung auf den Innenumfang des Reibringes wenigstens eine Durchgangsöffnung der Innenbelüftungsanordnung anzubringen. Der Reibring kann somit über die Innenbelüftungsanordnung vom Außenumfang bis zum Innenumfang durchgängig von Luft durchströmt werden, was die Kühlung des Reibringes verbessert sowie Schirmung und Rissbildung zu vermeiden hilft. Gleichzeitig wird durch die Verzahnung eine stabile formschlüssige Verbindung zum Bremsscheibentopf gewährleistet.

Die Verzahnung ist dabei besonders bevorzugt als Schrägverzahnung ausgeführt, um eine verschleißarme Übertragung von Bremskräften zwischen Bremsscheibentopf und Reibringen zu gewährleisten, wobei die Pressungen über die Zahnflanken der Schrägverzahnung hinweg weitestgehend konstant sind. Eine Schrägverzahnung erlaubt weiterhin ein gewisses Spiel in radialer Richtung, um so thermische Ausdehnungen der Bremsscheibe zu kompensieren und thermische Spannungen zu vermeiden. Die Schrägverzahnung ermöglicht in besonders verschleißarmer Weise eine reversible und gleichmäßige Ausdehnung, bzw. Kontraktion in radialer Richtung. Dies wirkt sich insbesondere günstig auf die Lebensdauer der Bremsscheibe aus.

Die Verzahnung zwischen Bremsscheibentopf und Reibring erfolgt bei der Schrägverzahnung über schräge Zahnflanken des Bremsscheibentopfs, welche in eine komplementäre Schrägverzahnung der Zahnflanken des Reibrings eingreifen. Der Öffnungswinkel zweier benachbarter Zahnflanken von Bremsscheibentopf, respektive Reibring liegt bevorzugt im im Bereich von 5 bis 45°. Die Schräge der einzelnen Zahnflanken, kann dabei auch unterschiedlich gewählt werden. Bevorzugt liegt die Abweichung der Seitenkante von der radialen Ausrichtung (auch Normale), im folgenden auch Schräge genannt, im Bereich von 2,5 bis 22,5°, bzw. -2,5 bis -22,5°. Dabei weisen die beiden Seitenflanken eines Zahnes besonders bevorzugt jeweils denselben Betrag der Abweichung aus der Normale auf. Besonders bevorzugt sind Öffnungswinkel im Bereich von 10 bis 15°.

Über die systematische Variation der Schräge benachbarter Zahnflanken im Bremsscheibentopf ist zudem eine drehrichtungsabhängige Optimierung der Anbindung möglich. Eine derartige Ausgestaltung sieht vor, dass die die Zahnflanken, welche die Hauptlast der Kräfte beim Bremsen aus dem vorwärts fahrenden Kraftfahrzeug aufnimmt steiler ausgebildet sind, als die entsprechend benachbart angeordneten. So kann es von Vorteil sein den Betrag der Schräge auf der einen Seite auf 0 bis 2,5° festzulegen. Der Öffnungswinkel ist bei dieser Variante auf nicht allzu große Werte aus dem o.g. Bereich beschränkt. Das bedeutet, dass die Schräge der Zahnflanke auf der anderen Seite, zwar deutlich höher ist, bspw. über 5°, aber bevorzugt bei maximal 20° liegt.

Um eine Sicherung zwischen Bremsscheibentopf und Reibring auch gegen axiale Bewegungen zu gewährleisten ist gemäß der Erfindung zumindest ein axiales Sicherungselement vorgesehen, über welches Bremsscheibentopf und Reibring verbunden sind. Dieses ist bevorzugt in einer radial innerhalb des Reibringes verlaufenden Aufnahmeöffnung angeordnet, wobei der Reibring im Bereich der Aufnahmeöffnung relativ zu dem Sicherungselement bewegbar ist. Durch die radiale Beweglichkeit des Sicherungselementes gegenüber dem Reibring wird die Gefahr einer Schirmung in Folge einer ungleichen Temperaturverteilung weiter verringert. Bei Auftreten einer derartigen Temperaturverteilung kann sich der Reibring frei in axialer Richtung ausdehnen, ohne dass durch das Sicherungselement entsprechende Kräfte in den Reibring eingetragen werden, welche zu einer Schirmung beziehungsweise Verformung und damit einhergehend einer Rissbildung führen könnten. Die Lebensdauer derartiger Bremsscheiben wird so vorteilhaft vergrößert.

Das Sicherungselement umfasst dabei eine mittels einer Schraube an den Bremsscheibentopf befestigte Hülse, die in einer radialen Durchgangsöffnung angeordnet ist und welche die Schraube außen umfangseitig umgibt. Durch eine derartige Hülse kann auf einfache Weise die erwünschte freie Bewegbarkeit des Reibringes in radialer Richtung relativ zu dem Sicherungselement erreicht werden.

Die Hülse ist entsprechend dem Gewinde der Schraube als Gewindehülse ausgebildet. Die Schraube kann auch als Gewindebolzen ausgebildet sein.

Die Schraube oder der Gewindebolzen kann dabei entweder von innen, d.h. auf der dem Bremsscheibentopf zugewandten Seite oder von außen eingeführt und gegen die Hülse geschraubt werden. Die Hülse, bzw. Gewindehülse wird entsprechend von innen oder von außen in die Bremsscheibe eingebracht. Die Hülse wird in entsprechende hierfür vorgesehene radial durch die Bremsscheibe verlaufende Durchgangbohrungen oder Durchgangsöffnungen gesteckt.

Bevorzugt wird eine lange Gewindehülse von außen aufgesteckt und ein relativ kurzer Gewindebolzen von innen dagegen geschraubt. Die Länge der langen Gewindehülse liegt dabei bevorzugt im Bereich von 50-90% der Länge der Durchgangsöffnung der Bremsscheibe. In dieser Ausgestaltung umfasst das Sicherungselement eine mittels einer Hülse an dem Bremsscheibentopf befestigten Schraube.

Es hat sich weiterhin als vorteilhaft gezeigt, den Schraubenkopf der Schraube im Querschnitt kleiner auszuführen als die Aufnahmeöffnung. Eine derartige Schraube kann dabei insbesondere von der Außenumfangseite des Reibringes über die Durchgangsöffnung eingeschraubt werden, wobei der kleinere Schraubenkopf eine freie Bewegung in der Aufnahmeöffnung erlaubt.

Schließlich hat es sich als vorteilhaft gezeigt, eine Mehrzahl von Sicherungselementen vorzusehen, die in vorzugsweise gleichen gegenseitigen Winkeln angeordnet sind. Hierdurch wird auf zuverlässige Weise eine Schirmung des Reibringes beziehungsweise der Bremsscheibe besonders gut vermieden. Die Kraftverteilung bei einer Ausdehnung der Scheibe und auch im Normalbetrieb wird gleichmäßig über den Scheibenumfang verteilt, so dass das Auftreten von Materialspannungen verringert wird.

Im Folgenden soll anhand der Zeichnungen die Erfindung und ihre Ausführungsformen näher erläutert werden.

Hierbei zeigen:
- Fig. 1: eine angeschnittene, perspektivische Darstellung einer Ausführungsform eines Reibringes einer erfindungsgemäßen Bremsscheibe und
- Fig. 2: eine angeschnittene, perspektivische Darstellung einer Ausführungsform einer erfindungsgemäßen Bremsscheibe und
- Fig. 3: eine Schnittdarstellung einer Anbindungsform zwischen Reibring und Bremsscheibentopf.

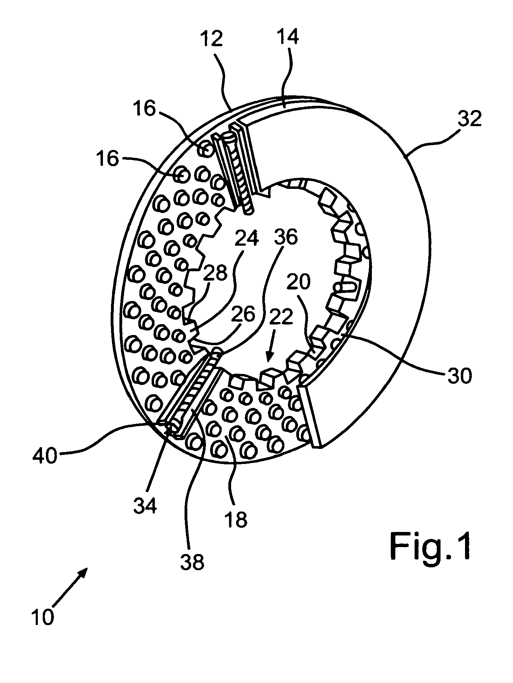

Der in Fig. 1 gezeigte Reibring 10 besteht aus zwei Reibringhälften 12 und 14, welche über Abstandsnoppen 16, von denen der Übersichtlichkeit halber nicht alle bezeichnet sind, miteinander verbunden sind. Die Freiräume 18 zwischen den Abstandsnoppen 16 und den Reibringhälften 12, 14 bilden dabei zwischen den Reibringhälften 12 und 14 ein System von Luftkanälen zur Innenbelüftung des Reibringes 10. Zur radialen formschlüssigen Verbindung des Reibringes 10 mit einem Bremsscheibentopf ist an der ersten Reibringhälfte 12 eine den Innenumfang 20 der Reibringhälfte 12 umlaufende Verzahnung 22 ausgebildet. Die Zähne 24 der Verzahnung 22, die der Übersichtlichkeit halber nicht alle bezeichnet sind, sind dabei als Schrägverzahnung ausgeführt, das heißt die Zahnflanken 26, 28 sind plan ausgebildet und stehen in einem Winkel zueinander. In axialer Richtung benachbart zur Verzahnung 22 sind Durchgangsöffnungen 30 ausgebildet, die den Innenumfang 20 des Reibringes 10 zu den Zwischenräumen 18 zwischen den Abstandselementen 16 öffnen, und so eine durchgängige Belüftung der Bremsscheibe 10 vom Außenumfang 32 bis zum Innenumfang 20 ermöglichen. Zwischen den Reibringhälften 12 und 14 sind weiterhin Durchgangsöffnungen vorgesehen, welche zur Aufnahme von Sicherungselementen 36 dienen, mittels welcher der Reibring 10 axial an einem Bremsscheibentopf gesichert werden kann. Die Sicherungselemente 36 sind dabei als Schrauben ausgeführt, welche in einer Hülse 38 aufgenommen sind, die wiederum innerhalb der Durchgangsöffnungen 34 angeordnet ist. Der Kopf 40 der Schrauben 36 weist einen kleineren Durchmesser auf als der Durchmesser der Durchgangsöffnungen 34. Durch die Lagerung der Schrauben 36 in den Hülsen 38 und den kleineren Durchmesser des Schraubenkopfes 40 ist der Reibring 10 in radialer Richtung gegenüber den Sicherungselementen 36 beweglich, so dass bei thermischer Ausdehnung des Reibringes 10 infolge der Reibungsbelastungen im Betrieb auftretende Spannungen minimiert werden.

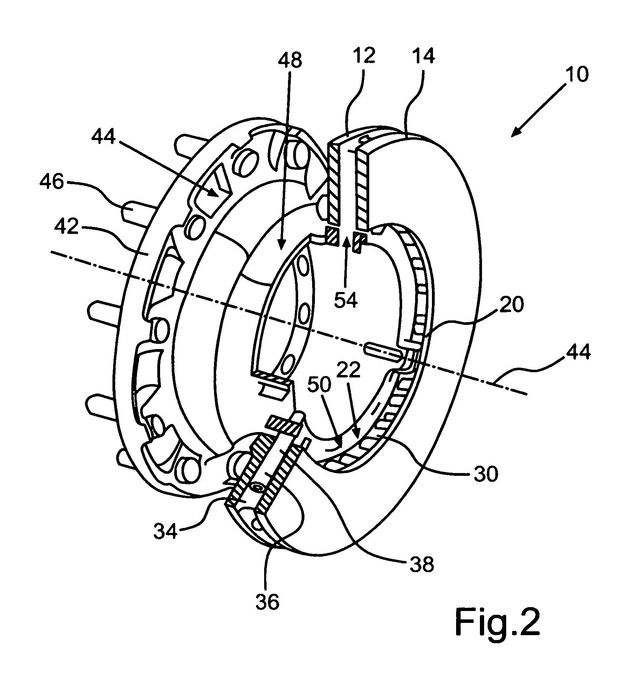

Fig. 2 zeigt die Anbindung eines derartigen Reibringes 10 an einem Bremsscheibentopf 42. Der Reibring 10 ist dabei koaxial mit dem Bremsscheibentopf 42 bezüglich der Achse 44, welche gleichzeitig eine Rotationssymmetrieachse der beiden Bauteile darstellt, angeordnet. Der Bremsscheibentopf 42 weist einen Randbereich 44 auf, welcher Durchgangsöffnungen für Schrauben 46 zum Sichern des Bremsscheibentopfes an einer Radnarbe umfasst. Ein innerer zylindrischer Bereich 48 des Bremsscheibentopfes 42 dient der formschlüssigen Verbindung des Bremsscheibentopfes 42 mit dem Reibring 10. Hierzu weist der innere Bereich 48 eine Verzahnung 50 auf, welche einen Außenumfang 52 des inneren Bereiches 48 des Bremsscheibentopfes 44 umläuft. Die Verzahnung 50 ist dabei komplementär zu der den Innenumfang 20 des Reibringes 10 umlaufenden Verzahnung 22 ausgebildet. Die Verzahnungen kämmen somit ineinander und sichern den Reibring bezüglich einer radialen Bewegung bezogen auf den Bremsscheibentopf 42. Auch bei Verbindung des Reibringes 10 mit dem Bremsscheibentopf 42 bleiben, wie erkennbar, die Durchgangsöffnungen 30, die den Innenumfang 20 des Reibringes 10 mit den Belüftungskanälen bilden, welche durch die Freiräume 18 gebildet werden, zugänglich. Eine gute Temperaturabfuhr durch Innenbelüftung der Bremsscheibe bleibt somit auch hier gewährleistet. Die Schrauben 36 in den Durchgangsöffnungen 34 des Reibringes 10 greifen mit ihren Endbereich 54 in korrespondierende Gewindebohrungen des inneren Bereiches 48 des Bremsscheibentopfes 42 ein. Hierbei kommen die Hülsen 38 in Anlage an die Wandung des inneren Bereiches 48 des Bremsscheibentopfes 42. Bei einer lokalen oder globalen Ausdehnung des Reibringes 10 aufgrund betriebsbedingter Erwärmung kann der Reibring 10 sich noch immer in radialer Richtung bezüglich der Schrauben 36 beziehungsweise Hülsen 38 bewegen, so dass auch im zusammengebauten Zustand Materialspannungen minimiert werden.

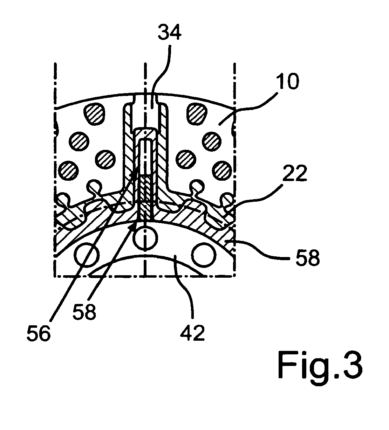

Figur 3 zeigt eine alternative Anbindungsform zwischen Reibring 10 und Bremsscheibentopf 42. Im Gegensatz zu den in den Figuren 1 und 2 dargestellten Ausführungsformen erfolgt die zusätzliche Sicherung zwischen Reibring 10 und Bremsscheibentopf 42 nicht durch eine von außen, also vom Außenumfang des Reibrings 10 her in eine in einer Durchgangsöffnung 34 angeordneten Hülse 38 eingeschraubte Schraube 36, sondern vielmehr vom Innenumfang des Reibrings 10 her. Hierzu wird zunächst eine Gewindehülse 56 von außen her in die Durchgangsöffnung 34 eingesteckt und in der Folge Bremsscheibentopf 42 und Reibring 10 vom Innenumfang des Reibrings 10 aus mit einem kurzen Gewindebolzen 58 verschraubt. Der Gewindebolzen 58 ist dabei wesentlich kürzer als die Gewindehülse 56 ausgeführt und umfasst etwa 50% deren Länge. Die Gewindehülse 56 selbst umfasst eine Länge von etwa 50 bis 90% der Länge der Durchgangsöffnung 34. In Figur 3 ist ebenfalls nochmals deutlich die Verzahnung zwischen Bremsscheibentopf 42 und Reibring 10 über eine Schrägverzahnung 58 des Bremsscheibentopfs 42, welche mit einer komplementären Schrägverzahnung 22 des Reibrings 10 kämmt, zu erkennen.

Zur Montage des Reibrings kann dabei folgendermaßen vorgegangen werden:

Der Reibring 10 wird zunächst seitlich auf den Bremsscheibentopf 42 ausgeschoben. Hierauf werden von innen - von der Drehachse des Reibrings gesehen- in die Durchgangsbohrungen des Bremsscheibentopfes 42 die Gewindebolzen 58 eingeschoben und in den Aussparungen des Bremsscheibentopfes 42 fixiert. Zuletzt werden von außen in die Durchgangsöffnungen 34 des Reibrings die Gewindehülsen 56 hineingeführt und mit den Gewindebolzen 58 verschraubt.

Diese Befestigungsmethode ist hinsichtlich einer kostengünstigen Wartung der Bremse, wie Austausch der Bremsscheibe, besonders vorteilhaft. Über einen Lebenszyklus einer Bremsscheibe kann eine merkliche Korrosion an Gewindehülse und -bolzen auftreten.

Diese könnte beim Versuch des Lösens der Hülse zum Zwecke des Bremsscheibenwechsels zu einem Abreißen des Gewindes führen. In diesem Falle wäre eine Demontage der Bremsscheibe nur mit hohem Aufwand möglich. Bei der erfindungsgemäß beschriebenen Variante darf die Schraube dagegen abreißen, denn die abgebrochene Schraube kann dann ohne Aufwand oder der Gefahr weiterer Beschädigung ohne weiteres nach innen durchgeschlagen werden.

## Patentansprüche

1. Bremsscheibe mit einem Bremsscheibentopf (42) und einem radial über eine Formschlussverbindung mit diesem verbundenen Reibring (10), welcher zwei über Abstandsmittel (16) verbundene Reibringhälften (12, 14) umfasst, zwischen denen Luftkanäle (18) einer Innenbelüftungsanordnung angeordnet sind,
wobei die Formschlussverbindung eine nur eine der Reibringhälften (12) innenumfangsseitig (20) umlaufende Verzahnung (22) umfasst, welche in Eingriff mit einer komplementären, den Bremsscheibentopf (42) außenumfangsseitig (52) umlaufenden Verzahnung (50) bringbar ist, wobei axial benachbart zu der die Reibringhälfte (12) umlaufende Verzahnung (22) auf dem Innenumfang (20) des Reibringes (10) wenigstens eine Durchgangsöffnung (30) zu der Innenbelüftungsanordnung vorgesehen ist,
und wobei der Bremsscheibentopf (42) und der Reibring (10) über wenigstens ein Sicherungselement (36) gegen axiale Bewegungen verbunden sind und das wenigstens eine axiale Sicherungselement (36) in einer radial innerhalb des Reibringes (10) verlaufenden Aufnahmeöffnung (34) angeordnet ist, wobei der Reibring (10) im Bereich der Aufnahmeöffnung (34) relativ zu dem Sicherungselement (36) radial bewegbar ist,
**dadurch gekennzeichnet, dass**
das Sicherungselement (36) eine mittels einer Schraube an dem Bremsscheibentopf (42) befestigte Hülse (38) umfasst, welche die Schraube (36) außenumfangsseitig umgibt.

2. Bremsscheibe nach Anspruch 1,
**dadurch gekennzeichnet, dass**
die Verzahnung (22, 50) der Reibringhälfte (12) und des Bremsscheibentopfes (42) eine Schrägverzahnung ist.

3. Bremsscheibe nach Anspruch 2,
**dadurch gekennzeichnet, dass**
der Öffnungswinkel zweier gegenüberliegender Seitenflanken eines Zahnes der Schrägverzahnung im Bereich von 5 bis 45° liegt.

4. Bremsscheibe nach Anspruch 1,
**dadurch gekennzeichnet, dass**
der Betrag der Schräge auf der einer Seite eines Zahnes der Schrägverzahnung bei 0 bis 2,5° und auf der anderen Seite bei 5 bis 20° liegt.

5. Bremsscheibe nach Anspruch 1,
**dadurch gekennzeichnet, dass**
ein Schraubenkopf (40) der Schraube (36) im Querschnitt kleiner ist als die Aufnahmeöffnung (34).

6. Bremsscheibe nach einem der Ansprüche 1 bis 5,
**dadurch gekennzeichnet, dass**
eine Mehrzahl von Sicherungselementen (36) vorgesehen ist, welche in vorzugsweise gleichen gegenseitigen Winkeln verteilt angeordnet sind.

7. Kraftwagen mit wenigstens einer Bremsscheibe nach einem der Ansprüche 1 bis 6.

8. Verfahren zur Montage eines Reibrings einer Bremsscheibe gemäß einem der voran gegangenen Ansprüche 1 bis 6 auf einen Bremsscheibentopf (42), umfassend die Schritte;
- seitliches Aufschieben des Reibrings (10) auf den Bremsscheibentopf (42),
- Einschieben der Gewindebolzen (58) von innen in die Durchgangsbohrungen des Bremsscheibentopfes
- Fixieren der Gewindebolzen in den Aussparungen des Bremsscheibentopfes
- Einführen der Gewindehülsen (56) von außen in die Durchgangsöffnungen (34) des Reibrings (10) und verschrauben mit den Gewindebolzen (58).

## Claims

1. Brake disc having a brake disc pot (42) and a friction ring (10) radially connected thereto by a positive connection and comprising two friction ring halves (12, 14) joined by way of spacer means (16), between which air passages (18) of an interior ventilation arrangement are provided, wherein the positive connection comprises a toothing (22) circling the inner circumference (20) of one friction ring half (12) only and capable of being brought into engagement with a complementary toothing (50) circling the outer circumference (52) of the brake disc pot (42), wherein, axially adjacent to the toothing (22) circling the friction ring half (12), at least one through-opening (30) to the interior ventilation arrangement is provided on the inner circumference (20) of the friction ring (10),
and wherein the brake disc pot (42) and the friction ring (10) are secured against axial movements by means of at least one securing element (36) and the at least one axial securing element (36) is located in a reception opening (34) extending radially within the friction ring (10), the friction ring (10) being radially movable relative to the securing element (36) in the region of the reception opening (34), **characterised in that**
the securing element (36) includes a sleeve (38) which is secured to the brake disc pot (42) by means of a screw and surrounds the outer circumference of the screw (36).

2. Brake disc according to claim 1,
**characterised in that**
the toothing (22, 50) of the friction ring half (12) and the brake disc pot (42) is a helical toothing.

3. Brake disc according to claim 2,
**characterised in that**
the opening angle of two opposite side flanks of a tooth of the helical toothing lies in the range from 5 to 45°.

4. Brake disc according to claim 1,
**characterised in that**
the amount of bevel lies in the range from 0 to 2.5° on one side of a tooth of the helical toothing and in the range from 5 to 20° on the other side.

5. Brake disc according to claim 1,
**characterised in that**
a screw head (40) of the screw (36) has a smaller cross-section than the reception opening (34).

6. Brake disc according to any of claims 1 to 5,
**characterised in that**
a plurality of securing elements (36) is provided, which are preferably distributed at equal mutual angles.

7. Motor vehicle having a brake disc according to any of claims 1 to 6.

8. Method for mounting a friction ring of a brake disc according to any of claims 1 to 6 on a brake disc pot (42), comprising the following steps:
- laterally pushing the friction ring (10) onto the brake disc pot (42),
- inserting the stud bolts (58) into the through-holes of the brake disc pot from the inside,
- securing the stud bolts in the recesses of the brake disc pot,
- inserting the threaded sleeves (56) into the through-openings (34) of the friction ring (10) from the outside and screwing them together with the stud bolts (58).

## Revendications

1. Disque de frein doté d'une cloche de disque de frein (42) et d'une bague de friction (10) laquelle étant reliée radialement à la cloche de disque de frein par un assemblage par liaison de forme, ladite bague de friction comprend deux moitiés de bague de friction (12, 14) reliées par un moyen d'écartement (16), entre lesquelles sont disposés des canaux d'air (18) d'un système d'aération intérieur, l'assemblage par liaison de forme comprenant une denture entourant seulement une des moitiés de bague de friction (12), sur sa périphérie intérieure (20), ladite denture pouvant être amenée en prise avec une denture (50) complémentaire entourant la cloche de disque de frein (42), sur sa périphérie extérieure (52), au moins un orifice de passage (20) vers le système d'aération intérieur étant disposé axialement à proximité de la denture (22) entourant la moitié de bague de friction (12) sur la périphérie intérieure (20) de la bague de friction (10) et, la cloche de disque de frein (42) et la bague de friction (10) sont reliées par au moins un élément de blocage (36) contre des mouvements axiaux et l'au moins un élément de blocage (36) axial est disposé radialement dans une ouverture réceptrice (34) s'étendant radialement à l'intérieur de la bague de friction (10), la bague de friction (10) pouvant se déplacer radialement dans la région de l'ouverture réceptrice (34) par rapport à l'élément de blocage (36), **caractérisé en ce que** l'élément de blocage (36) comprend un manchon (38) fixé sur la cloche de disque de frein (42) au moyen d'une vis, ledit manchon entourant la vis (36) sur sa périphérie extérieure.

2. Disque de frein selon la revendication 1, **caractérisé en ce que** la denture (22, 50) de la moitié de bague de friction (12) et de la cloche de disque de frein (42) est une denture hélicoïdale.

3. Disque de frein selon la revendication 2, **caractérisé en ce que** l'angle d'ouverture des deux flancs latéraux opposés d'une dent de la denture hélicoïdale est compris dans la plage de 5 à 45°.

4. Disque de frein selon la revendication 1, **caractérisé en ce que** l'inclinaison sur l'un des côtés d'une dent de la denture hélicoïdale est comprise dans la plage de 0 à 2,5° et sur l'autre côté dans la plage de 5 à 20°.

5. Disque de frein selon la revendication 1, **caractérisé en ce qu'**une tête (40) de la vis (36) est plus petite en section transversale que l'ouverture réceptrice (34).

6. Disque de frein selon l'une quelconque des revendications précédentes de 1 à 5, **caractérisé en ce qu'**il est prévu une pluralité d'éléments de blocage (36) qui sont répartis de préférence à un angle identique les uns par rapport aux autres.

7. Véhicule automobile doté d'au moins un disque de frein selon l'une quelconque des revendications 1 à 6.

8. Procédé de montage d'une bague de friction d'un disque de frein selon l'une quelconque des revendications précédentes 1 à 6 sur une cloche de disque de frein (42), comprend les étapes suivantes :
- Faire glisser latéralement la bague de friction (10) sur la cloche de disque de frein (42)
- Insérer le boulon fileté (58) depuis l'intérieur dans les alésages de passage de la cloche de disque de frein
- Fixer le boulon fileté (56) dans les évidements de la cloche de disque de frein
- Introduire le manchon fileté (56) depuis l'extérieur dans les orifices de passage (34) de la bague de friction (10) et vissage au moyen du boulon fileté (58).
